Europäisches Patentamt

European Patent Office

Office européen des brevets

(11) Publication number: 0 266 927 B1

# EUROPEAN PATENT SPECIFICATION

(45) Date of publication of patent specification: 29.04.92

(51) Int. Cl.5: C01B 21/072

(21) Application number: 87309150.8

(22) Date of filing: 15.10.87

(54) Process for the continuous production of high purity, ultrafine, aluminium nitride powder by the carbo-nitridisation of alumina.

(30) Priority: 15.10.86 US 918980

(43) Date of publication of application:
11.05.88 Bulletin 88/19

(45) Publication of the grant of the patent:
29.04.92 Bulletin 92/18

(84) Designated Contracting States:
AT BE CH DE ES FR GB IT LI LU NL SE

(56) References cited:
FR-A- 543 529
GB-A- 784 126
US-A- 2 962 359
US-A- 3 036 888
US-A- 3 092 455

CHEMICAL ABSTRACTS, vol. 4, 1932, page 3433, abstract no. 2123, Columbus, Ohio, US; B. NEUMANN et al.: "The heat of formation of nitrides. II. the heat of nitriding of lithium, aluminum, beryllium and magnesium."

(73) Proprietor: THE CARBORUNDUM COMPANY
200 Public Square
Cleveland Ohio 44114-2375(US)

(72) Inventor: Kim, Jonathan J.
79 Brandywine Drive
Williamsville New York 14221(US)
Inventor: Katz, Joel D.
Los Alamos National Lab Mail Stop G-770
Box 1663
Los Alamos New Mexico 87545(US)
Inventor: Venkateswaran, Viswanathan
2145 Bedell Road
Grand Island New York 14072(US)
Inventor: McMurtry, Carl H.
3939 Lower River Road
Youngstown New York 14174(US)
Inventor: Sane, Ajit Y.
3535 Trails End Drive
Medina Ohio 44256(US)

(74) Representative: Adams, William Gordon et al
RAWORTH, MOSS & COOK 36 Sydenham Road
Croydon Surrey CR0 2EF(GB)

CHEMICAL ABSTRACTS, vol. 62, no. 4, 1965, abstract no. 3631d, Columbus, Ohio, US; I.A. KHAN et al.: "Preparation of aluminum nitride of low carbon content", & INDIAN J. CHEM. 2(10), 388-90 (1964), & CHEM. ZEN-TRALBLATT, vol. 31, 1965, abstract no. 0608

CHEMICAL ABSTRACTS, vol. 104, no. 4, January 1986, pages 109,110, abstract no. 21416w, Columbus, Ohio, US; & JP-A-60 176 910 (TOKUYAMA SODA k.K.) 11-09-1985 & PATENT ABSTRACTS OF JAPAN, vol. 10, no. 23 (C-325) [2080], 29th January 1986

CHEMICAL ABSTRACTS, vol. 103, no. 16, October 1985, page 143, abstract no. 125898a, Columbus, Ohio, US; & JP-A-60 60 910 (TOKUYAMA SODA K.K.), 08-04 1985 & PATENT ABSTRACTS OF JAPAN, vol. 9, no. 192 (C-296) [1915], August 8th 1985

## Description

In theory, the simplest method to prepare aluminium nitride is to heat aluminium metal in the presence of nitrogen; this method is called direct nitridisation. In practice, this method is more difficult than it first appears. Since aluminium melts at about 660°C and the reaction of aluminium and nitrogen begins in general at about 800°C, the aluminium will melt and coalesce into a pool before the reaction begins, which prevents an intimate contact of the reactants. Furthermore, once formed, the aluminium nitride coating acts as a skin or barrier to further reactions. Thus, very low yields are obtained, and the purity of the product aluminium nitride is low because of the large quantities of unreacted aluminium present.

Aluminium nitride can also be obtained by reacting nitrogen with a mixture of aluminium oxide and carbon which has been raised to a high temperature. In order to obtain practically complete conversion of the aluminium oxide to the nitride, it is important that the temperature does not exceed 1800°C, while ensuring sufficient nitrogen flow at all times through the entire space filled with the charge of the raw solid material. Any overheating involves volatilizations which impair the efficiency of the reaction, are detrimental to the quality of the end product, and may cause sintering which prevents the continuous operation of the furnace. Lack of nitrogen, even locally, brings about fusion with partial sintering of the charge, so that the completion of the nitriding operation becomes impossible.

Because of the foregoing problems, the commercially available aluminium nitride powder is very expensive. Aluminium nitride is usually produced by nitriding pure aluminium powder (approximately 300 mesh) in a two-step operation. First, the aluminium powder is nitrided for an extended period at about 600°C to form a coating of aluminium nitride, which prevents coalescense of the molten particles. This is followed by a second treatment in nitrogen at approximately 1200-1400°C. The product treated in nitrogen at 1200-1400°C is unstable to moisture and hydrolyses very easily. To stabilise the product, additional heat treatment at about 2000°C is required. In short, the process is slow, tedious, and not cost effective.

U.S.-A-3,307,908 to Victor Mandorf, Jr. describes a further process for preparing aluminium nitride, which process comprises forming a mixture consisting of finely-divided aluminium metal in the amount of 30-60% by weight and finely-divided carrier material in the amount of 70-40% by weight. The carrier material is selected from the group consisting of aluminium nitride, aluminium fluoride, and mixtures thereof. In this process, a nitriding atmosphere is provided around the mixture which is inert to aluminium nitride and free from oxygen and other materials which interfere with nitriding. Generally, this atmosphere consists of a mixture of nitrogen and ammonia. The mixture is then heated to at least 800°C while under said atmosphere, thereby nitriding the aluminium to form aluminium nitride.

In U.S.-A-3,032,398 to Clair, another process for preparing aluminium nitride is disclosed. That process comprises forming particulate material composed of aluminium oxide, carbon and a calcium aluminate binder, continuously passing the particulate material downward by gravity into an elongated externally heated reaction zone wherein the particulate material is heated uniformly to a temperature not in excess of 1750°C, continuously passing a current of nitrogen into said zone, countercurrent to the descended particulate material, to form aluminium nitride. In the process of the Clair patent, an electrically heated shaft furnace is used to conduct the reaction and certain quantities of aluminate o f lime, a binder, are required to prevent disintegration during the entire nitriding process. The binder causes crust formation which hinders the proper downward flow of the aluminium oxide-carbon pellets or agglomerates. This system also requires that the reaction temperature be kept at 1750°C or below. It appears that unless the temperature is kept that low, the reaction product is not easy to grind and cannot be used for its intended purpose.

It is felt that the requirements in the Clair patent are the result of performing the continuous production of aluminium nitride using a countercurrent electric shaft furnace. The electric shaft furnace disclosed by Clair is not a good reaction vessel for conducting this reaction. Clair conducted his process below 1750°C to avoid sintering of agglomerates, which interferes with the flow of nitrogen to the core of the agglomerate. Good gas particle mixing is absent in this reactor vessel and a local lack of nitrogen is a frequent occurrence. This factor, along with the attendant uneven heating which results since the reaction vessel is heated by resistances from the shell inward, cause the endothermic conversion reaction to stop, and the charge to overheat and fuse together along the walls of the reactor. Once all or part of the charge is fused, operation of the shaft furnace becomes difficult since the charge is no longer free flowing. Additionally, hard crusts of calcium and carbon form in the cooler (1200-1300°C) parts of the furnace which also hinder the proper downward flow of the agglomerate. In summary, the electric shaft furnace is plagued by poor gas agglomerate mixing, inadequate thermal uniformity and agglomerate flow problems.

3

In the past, catalysts, such as calcium fluoride, either were not used or were found to be ineffective. Clair, in U.S.-A-3,032,398, mentions the use of calcium aluminate as a binder for pelletising but makes no mention of a catalyst. Sodium fluoride has been used as a catalyst for the direct nitridisation of aluminium powder.

Therefore, it is an object of the present invention to provide a process and apparatus for preparing aluminium nitride, which process is capable of a high rate of production and an extremely pure product.

It is a further object of the present invention to provide a continuous process and an apparatus for the preparation of aluminium nitride by carbo-nitridisation, which process is capable of a high rate of production and an extremely pure product.

It is another object of the present invention to provide a process and a device for the preparation of aluminium nitride by the carbo-nitridisation of alumina, which is capable of producing a high rate of production, and an extremely pure product and cost effective product.

It is another object of the present invention to provide an efficient and cost effective process and a device for the preparation of aluminium nitride by the carbo-nitridisation of alumina in which a catalyst allows the reaction to be conducted at temperatures in the range of 1600-1850°C.

This invention is a multi-step, integrated process for the manufacture of high purity, ultra-fine aluminium nitride powder by the carbo-nitridisation of alumina. The process comprises formation of agglomerates uniform in both size and chemical composition containing a stoichiometric mixture of alumina and carbon with the addition of a small amount of catalyst, precisely controlled furnacing of these agglomerates in the presence of nitrogen in a well-mixed reaction vessel to achieve a uniform and consistent level of conversion and milling of the as-reacted agglomerates under a controlled atmosphere to produce high purity powder with a particle size of about 1 $\mu$m.

For a better understanding of the invention and to show how the same may be carried into effect, reference will now be made, by way of example, to the accompanying drawings, in which:-

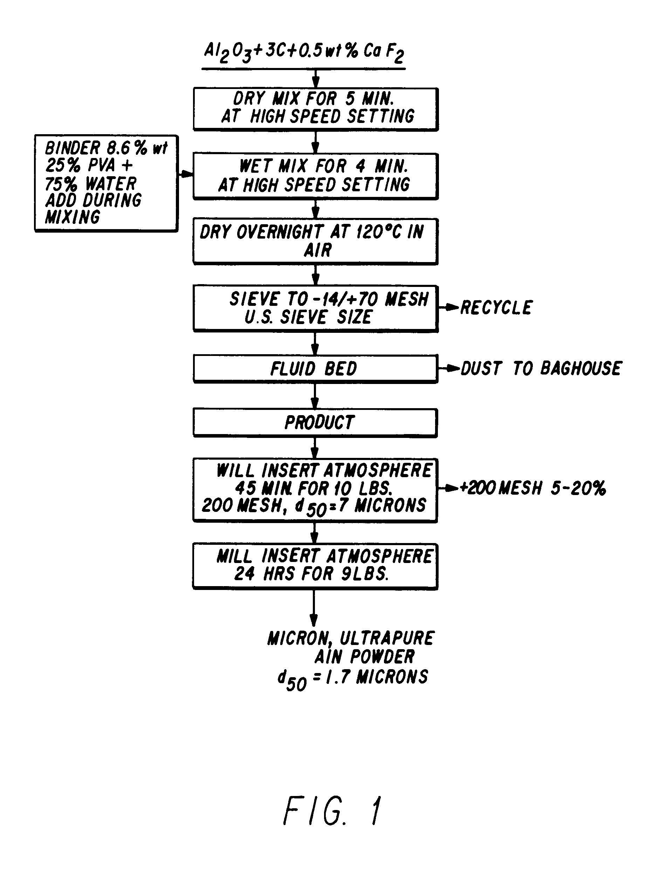

Figure 1 is a flow diagram of the pr ocess of the present invention;

Figure 2 is a vertical sectional view of the fluid bed reactor which is the preferred reaction vessel for the process of the present invention;

Figure 3 is a plan view of the lid of the bubble cap of the fluid bed reactor shown in Fig. 2; and

Figure 4 is a vertical sectional view of the bubble cap of the fluid bed reactor shown in Fig. 2.

The carbo-nitridisation of alumina takes place via the following overall reaction:

$$AL_2O_3(s) + 3C(s) + N_2(g) = 2AlN(s) + 3CO(g)$$

When properly controlled, this reaction can be used to produce micron sized aluminium nitride powder of greater than 99% purity.

High purity aluminium nitride may be produced by several high temperature processes. Among those which have been successful are the rotary kiln, packed bed reactor and fluid bed reactor. The fluid bed reactor process is ideal for operation in the continuous mode to produce large volumes of high purity aluminium nitride.

A continuous fluid bed reactor is an ideal process reactor for the carbo-nitridisation of alumina for several reasons. A fluid bed reactor provides excellent mixing of the agglomerates with a gas phase and good gas utilisation. Because of the excellent agglomerate gas mixing, the reactor also has a very even temperature profile. The good thermal mixing results in a uniform reaction, independent of whether the reaction is exothermic or endothermic as in the present case. These factors result in a consistently high and uniform degree of conversion when a continuous fluid bed is used, provided the alumina-carbon pellets are properly produced as described herein. The process of the present invention will be further described in light of the use of a fluid bed reactor which is the preferred reaction vessel for the process of the present invention.

The method of the present invention comprises formation of agglomerates uniform in both size and chemical composition containing a stoichiometric mixture of alumina and carbon with a small amount of catalyst, precisely controlled furnacing of these agglomerates in a well-mixed reaction vessel to achieve a uniform and consistent level of conversion and milling of the as-reacted agglomerates under a very well controlled atmosphere to produce a high purity micron sized powder. Among the variables to be optimised in the process of the present invention are the quality of the initial reactants, the operating temperature, the nitrogen flow rate, the residence time in the fluid bed reactor, pellet size and pellet feed rate.

Initially, agglomerates uniform in both size and chemical composition, consisting of a stoichiometric mixture of alumina and carbon with the addition of a small amount of catalyst, are formed. The feed material for producing aluminium nitride consists of pellets of aluminium oxide ($Al_2O_3$) and carbon with a catalyst. In order to obtain a high surface area aluminium nitride, it is preferable to start with a high surface area alumina, preferably of 1-50 $m^2/g$ surface area. The catalyst, preferably $CaF_2$, has no detrimental effect on the surface area or size of the aluminium nitride. For example, to make a batch of 27.2 Kg (60 lbs) of feed, 73.5 weight percent of alumina which can be obtained under the trade description "A-16" from Alcoa Corporation, 26.0 weight percent carbon (THERMAX - Registered Trade Mark) and 0.5 weight percent of calcium fluoride are dry mixed in an EIRICH (Registered Trade Mark) mixer which can be obtained from Eirich Machine Inc., New York, New York, for five minutes at high setting, to intimately blend the mixture. Agglomeration is accomplished by wet mixing with 12 weight percent of polyvinyl alcohol solution (25% by volume polyvinyl alcohol and 75% by volume water) for four minutes at high setting. The four minutes includes three minutes required to add the polyvinyl alcohol solution. The agglomerated feed is dried in an oven at 120°C in a pan. The dried agglomerates are sieved through 14 and 70 mesh U.S. Standard (1.41 mm and 210 $\mu$m). The above-mentioned procedure results in 80-85% of the agglomerate in -14/+70 size fraction with $d_{50}$ of approximately 35 mesh U.S. Standard (500 $\mu$m).

It is especially important to the ultimate purity and particle size obtainable that the agglomeration process produce highly uniform pellets of the desired size and chemical composition. Since there is no transport of alumina or carbon between the pellets in a fluid bed reactor, and limited transfer within, each pellet must contain a stoichiometric and uniform mixture of the components to achieve a high degree of conversion without excessive grain growth, a condition wherein the aluminium nitride grains get bigger and sinter together so that they are harder to grind. When a catalyst is used to accelerate the reaction, it too must be uniformly distributed within the agglomerate.

In addition, for the reaction to continue, nitrogen gas must continuously pass into the pellets and carbon monoxide must be released from them. The pellets must therefore be porous and their porosity controls the rate of the conversion reaction. Since the rate of chemical conversion is in part dictated by pore size and density, it is of equal importance that pore size and the distribution of pores within each agglomerate be uniform.

Uniformly sized pellets are also important to the method of the present invention. A well-controlled size distribution is essential to the efficient operation of a continuous fluid bed reactor for the following reasons. The residence time of an agglomerate in the bed is a function of the size, with the rate of the conversion reaction being faster for smaller pellets. Accordingly, segregation of agglomerates by size within the bed will occur, both of which will result in poor as-reacted uniformity. Additionally, it has been shown, independent of the type of reactor used, that the rate of the conversion reaction is a function of agglomerate diameter. If big pellets and small pellets are put into the reactor together, and the pellets are left in until even the big pellets have reacted, grain growth will occur in the smaller pellets. Consideration of the above factors indicates that if the pellet size is not adequately controlled, the products will be non-uniform and of low purity.

Typically, the gas velocity for fluidisation is chosen based on the mean particle size. For the case of this illustration, a gas flow rate of 56.6 litres per minute (2 standard cubic feet per minute (SCF/M)) was chosen since this flow rate results in the minimum fluidisation velocity for a mean agglomerate size of 500 $\mu$m (Note: 1 SCF is the amount of gas pressure in one cubic foot of space at a temperature of 15.6°C at a pressure of 1 atmosphere). An advantage of using the minimum fluidisation is that good nitrogen utilisation is achieved. If the size distribution of the agglomerates is too large, the fine particles will be blown out of the top of the bed and the coarse particles will sink to the bottom of the bed.

Additionally, the pellets must be porous, to ensure that the reaction is complete during furnacing. The fluid-bed reactor used for this illustration has an internal diameter of 20.32 cm (8″) and a bed height of 50.8 cm (20″). Heating is provided by a 106.68 cm (42″) high, 55.88 cm (22″) diameter induction coil which is concentric with the fluid bed. The fluid bed is operated continuously for over 200 hours with a nitrogen gas flow rate of 56.6 litres per minute (2 SCF/M). The pellets will have a residence time in the fluid bed of from 3 to 20 hours depending on the temperature and the desired level of conversion. The effect of temperature and feedrate on the level of conversion is illustrated in Table 1. To achieve the same degree of conversion at a lower reaction temperature, a slower feedrate is necessary. The relationship between feedrate and temperature is not linear or obvious, and hence, must be determined by careful variation of operating parameters.

TABLE 1

| TEMPERATURE VS FEEDRATE OPTIMISATION | | | | |
|---|---|---|---|---|
| Temp °C | Feedrate | | Oxygen wt% | Carbon wt% |
| | Kg/Hr | (lb/Hr) | | |
| 1600°C | 0.65 | (1.44) | 2.38 | 2.49 |
| 1650°C | 0.34 | (0.75) | 0.94 | 0.71 |
| 1650°C | 0.62 | (1.37) | 1.04 | 1.00 |
| 1700°C | 0.56 | (1.24) | 0.64 | 0.61 |
| 1700°C | 2.83 | (6.25) | 4.43 | 3.87 |
| 1750°C | 1.26 | (2.71) | 0.53 | 0.50 |
| 1750°C | 2.83 | (6.25) | 2.75 | 2.20 |

If the pellets do not have uniform porosity, the reaction is not uniform. Therefore, if 100% conversion of the product is the desired goal, the pellets must have uniform porosity and the pores must be uniform. If the pellets each contain some big pores and some small pores, and the pellets are left in the furnace longer to wait for all of the pellets to react, grain growth occurs. In this situation, the grain size is not uniform and the agglomerates will be harder to grind to a uniform powder size.

The agglomerates as formed are then furnaced. Pellets of aluminium oxide, carbon and the catalyst of the desired mesh size are charged at the rate of 0.23-2.72 Kg/hr (0.5-6 lb/hr) preferably 1.36 Kg/hr (3.0 lb/hr), through a graphite feed chute which extends all the way below the surface of the fluidised bed. In order to produce high purity aluminium nitride which can be milled to yield ultra-fine powder, the temperature at which the carbo-nitridisation reaction is conducted must be considered. At higher temperatures, aluminium nitride grains sinter together into large, hard pellets which are difficult to grind. The reaction should be performed at temperatures low enough so that the the appreciable sintering and grain growth are avoided. If a significant amount of sintering occurs, the as-reacted pellets will be difficult to mill, requiring excessive milling time. The amount of milling time to produce micron size powders should be kept to a minimum since contamination during milling is a function of time. Proper control of the reaction temperature is, therefore, essential to produce friable as-reacted pellets which are easily milled, and hence, will maintain their high purity after milling to form particles whose particle size is approximately 1 $\mu$m. In the present invention, the reaction can be conducted economically at lower temperatures because of the action of the catalyst.

To achieve the desired friability, the reaction must be conducted below 1850°C, preferably in the range of 1600-1800°C. In the past, it was thought that operating the reactor in such a low temperature range was undesirable in terms of production rate, since this process, as are most high temperature conversion reactions, is thermally activated and decreasing reaction temperature drastically lowers the production rate. To make production in lower temperature regions practical, the present invention uses a catalyst. Calcium fluoride when added in the correct amount has been determined to behave as a catalyst at the reaction temperature of interest. Concentrations of between 0.1 and 0.75 weight percent $CaF_2$ have been determined to have a good catalytic effect. Too high a concentration of $CaF_2$ (2.5 weight percent) was found to result in diminished catalytic activity. Other fluorides, such as yttrium fluoride ($YF_3$) and sodium fluoride (NaF) are believed to have a similar catalytic effect in the process of the present reaction in the 1600-1800°C range instead of at higher temperatures. As excessive sintering occurs, the conversion reaction slows down and achieving a high degree of conversion without a large amount of grain growth becomes impossible. Furnacing conditions must be well controlled to avoid excessive grain growth. A uniform aluminium nitride grain size is necessary to produce micron size powder suitable for further processing. Grain growth is undesirable since it makes milling to produce ultra-fine powders very difficult.

The agglomerates are furnaced for approximately 3-20 hours in the fluid bed reactor.

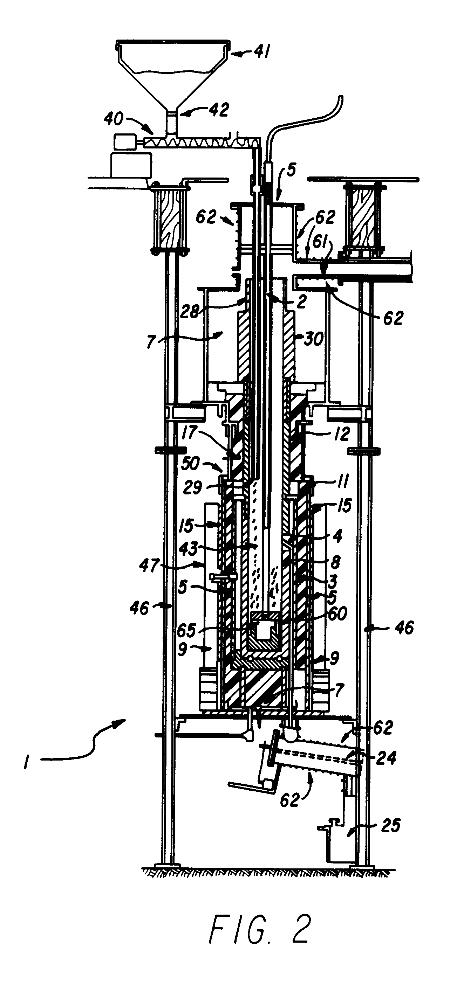

As shown in Fig. 2, the fluid bed reactor 1 comprises a furnace reactor 50 which is in turn comprised of three chambers in communication with each other. The lower furnace chamber 8, the reaction chamber, is a cylindrical-shaped graphite tube with a closed bottom and a machined top. The middle furnace chamber 12 is a cylindrical-shaped graphite tube which is machined at the top and bottom to sleeve fit securely with the lower furnace chamber 8 and the uppe r furnace chamber 30. The upper furnace chamber 30 is a cylindrical-shaped graphite tube machined for sleeve fit on both ends. The entire furnace is supported by four steel columns 46. All metallic parts are kept at a safe distance from the induction coil 15, described below.

The heat input is provided by a thirty-seven turn induction coil 15, surrounding the lower furnace chamber 8, which heats a susceptor 11. The susceptor is a long graphite cylinder with an open bottom and an open top which is positioned within the area bound by the induction coil 15 and the lower furnace chamber 8. Insulation 5 is provided in the space between the induction coil 15 and the susceptor 11, preferably by THERMAX (RTM) carbon powder. Carbon felt 17 is used as insulation around the top portion of the induction coil 15. Wood planks 9 are positioned on the side of the induction coil 15 furthest from the susceptor 11 to support the induction coil 15 and to hold them in place. Carbon black 7 provides an additional source of insulation in the reactor 1 for efficient heating. In operation, the susceptor 11 induces or draws energy from the induction coil 15 and heats the lower chamber 8 by radiation. The susceptor 11 acts as a second wall of the reaction chamber in case of rupture of the first wall. Rupture is common when performing this type of process because the abrasive agglomerates erode the wall of the chamber. A rupture in the wall can cause heat to escape, which may injure workers in the area. It may even cause an explosion, damaging the reactor, the surrounding equipment and having the potential to critically harm personnel.

The fluidised bed 43 is positioned within the lower furnace chamber 8. When the fluid bed reactor 1 is operating under normal operating conditions, the fluidised bed spans the middle portion of the induction coil 15.

For regulated continuous charging, the agglomerated feed is introduced into the fluid bed reactor 1 by way of a weighted supply bin or hopper 41. A screw feeder 40 connected to the hopper by a flexible chute 42 transports the feed down a long graphite feed chute 28 to the feed chute end 29 located within the middle furnace chamber 12. The feed then free falls into the lower furnace chamber 8 where treatment will occur.

At the same time, nitrogen fluidising gas is supplied from the top of the furnace 50 through a graphite inlet line or conduit 2 which extends from the top of furnace 50 through the upper 30 middle 12 and lower 8 furnace chambers to a bubble cap 60 located within the lower furnace chamber 8 and positioned below the fluidised bed or reaction zone 43. The number of joints in the gas conduit line 2 have been minimised in order to avoid gas leaks. Introduction of the fluidising gas from the top of the furnace and through the zone heated by the induction coil 15 results in the gas attaining a very high temperature before entering the fluidised bed 43. The heated gas enters the bubble cap 60 through the top.

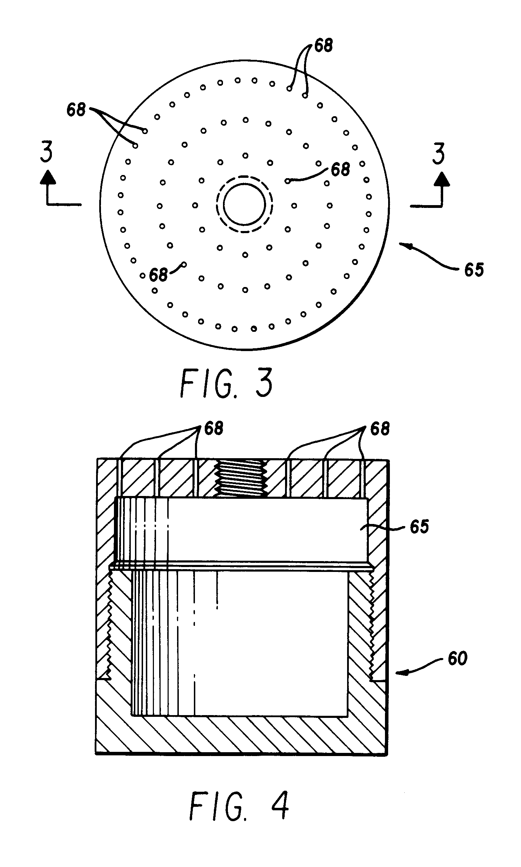

Figs. 3 and 4 illustrate the bubble cap 60 in greater detail. The bubble cap 60 comprises a graphite chamber having a graphite top or lid 65 fitted to the chamber by use of a screw joint. The lid of the bubble cap 65 is formed with a plurality of holes 68 to allow for escape of the hot fluidising gas therethrough. The inlet line 2 for the fluidising gas communicates with and terminates in the lid 65 of the bubble cap 60. The bubble cap is positioned at the lower end of the heating zone with the fluidising gas being delivered to the bubble cap from a source above the heating zone through the conduit 2 with the gas being heated within the conduit as the gas passes through the entire heating zone.

Thus in operation, the fluidising gas descends through the inlet line 2 into the bubble cap 60. It then rises up through the lid 65 of the bubble cap into the reaction chamber 8. The rising preheated fluidising gas causes the feed which has been released from the end of the feed chute 29 to fluidise as it remains in the reaction chamber 8. More importantly, the rising exhaust gas begins to lose heat, which is transferred to the fluidising gas coming down the inlet line 2 to heat it. This transfer helps in maintaining the reactor at a temperature not previously achieved in fluid bed reactors. This countercurrent heat transfer helps in maintaining constant temperatures between the gas and solids resulting in constant conversions. The temperature can be maintained at up to 2000°C in the reaction chamber 8, as indicated by the pyrometer (not shown), which can be checked through the sight tube 47.

The feed remains in the reaction chamber 8 for a specified amount of time determined by the quality of the product desired. The product is continuously discharged by overflow through a discharge chute plug 4 in the wall of the lower furnace chamber 8 near the surface of the fluidising bed 43. The hot product is discharged through the product discharge chute 3 (in the discharge chute plug 4) which extends from the reaction chamber 8 into a rotating water cooled cylinder 24 positioned below the furnace 50 and within the steel frames 46. There, the product is cooled to approximately 150°C to quench the conversion process. The cooled product overflows from the cooled cylinder 24 through a weight actuated dumper 25 positioned below and in communication with said cooled cylinder 24 and supported by said steel frame 46 where it cools to even lower temperatures. Water cooling coils 62 surround said cooled cylinder 24 to assist the cooling process. The rotary cooler may be purged with an inert gas such as nitrogen so that the product does not become oxidised during cooling.

The hot fluidising gas from the reaction chamber 8 is led through a water cooled connector tube 61 to the cyclone assembly (not shown) which separates the entrained solids. Water cooling coils 62 surround the connector tube to effect cooling. The cyclone also serves the additional purpose of burning any carbon monoxide in the furnace gas. The cyclone/afterburner is lined with insulation to isolate the gases leaving the cyclone at 300°C.

The fluid bed reactor assembly is cooled by 5 cooling water lines. A line (not shown) with a capacity of 30 gpm (gallons per minute) (136 litres per minute) is used for cooling the power supply (not shown) of the induction coil 15. There are four other parallel lines: an induction coil line for cooling the induction coil 15; a furnace line for cooling the upper furnace chamber 30; a connector tube assembly line for cooling the connector tube assembly; and a rotary drum line for cooling the rotary drum 24. These cooling lines are each marked 62 on the accompanying drawing. The total cooling water requirement of this furnace is 43 gpm (195 litres per minute).

This reactor 1 is superior to known fluidised bed reactors because of the way the gas is introduced into the reaction chamber. The gas is introduced from the top of the reactor and travels downward toward the bubble cap. As it is travelling downward, the gas is heated by outgoing exhaust gases by countercurrent heat transfer. By countercurrent heat transfer is meant that heat that is lost from the exhaust gas rising from the reactor is transferred to the gas travelling down inlet line 2 toward the bubble cap so there is a very efficient heating system within the reactor.

The as-reacted agglomerates are then milled at the rate of 6.8 Kg/hr (15 lb/hr). As discussed above, proper control of the reaction temperature prior to milling will decrease the amount of time required to mill to produce micron sized powders. Keeping the milling time at a minimum will also ensure that oxygen pickup is kept to a minimum. Oxygen pickup may be further minimised by performing the milling reaction under an inert atmosphere. Milling can be performed under an inert atmosphere, such as a nitrogen atmosphere. A second milling operation may be performed to achieve a still higher surface area. Among the suitable mills are the Model T-15 Jet TROST (Trade Mark) mill, which can be obtained from the Plastomer Division of Garloch, Trost Mill Dept., Newtown, PA 18940, and the Sweco VIBRO (Trade Mark) Energy Grinding Mill, which can be obtained from Sweco Inc., Los Angeles, CA. Other types of mills may also be acceptable. This operation is facilitated by the care taken previously to assure uniformity of the raw powders, the as-agglomerated pellets and of the chemical reaction, as all of these factors are essential for producing a uniform as-reacted aluminium nitride grain size.

The foregoing invention is further illustrated by the following non-limiting examples. In all examples, $N_2$ feed rate is 56.6 litres/min (2 standard cubic ft/min (SCF/M)), THERMAX is a Registered Trade Mark, "A-14" is a trade designation used by Alcoa Corporation, TROST and SWECO are trade marks and the 14 and 70 mesh sizes mentioned are U.S. Standard sieve sizes equivalent to 1.41 mm and 210 $\mu$m, respectively.

EXAMPLE 1

| Temperature: | 1650°C ± 5°C |
| --- | --- |
| Pellet composition: | 73.5 wt% A-14 (alumina) 26.0 wt% Thermax (Carbon) 0.5 wt% $CaF_2$ |
| Pellet Size: | -14/+70 mesh ($d_{50}$ = 500 $\mu$m) |
| Product Size: | -14/+70 mesh ($d_{50}$ = 400 $\mu$m) |

|  | Feed Rate | | Discharge | |
| --- | --- | --- | --- | --- |
|  | Kg/hr | (lb/hr) | Kg/hr | (lb/hr) |
| Average Rate | 0.622 | (1.37) | 0.36 | (0.79) |
| Standard Deviation | 0.064 | (0.14) | 0.2 | (0.43) |
| Range (low/high) | 0.454 to 0.75 | (1.0 to 1.65) | 0.05 to 1.45 | (0.1 to 3.2) |
| Number of Readings | 24 |  | 24 |  |

| Product Composition | | | |
|---|---|---|---|
| | Wt% | Twice Standard Deviation | Number of Samples |
| Carbon | 1.00 | 0.41 | 7 |
| Oxygen | 1.04 | 0.30 | 8 |
| Nitrogen | 31.67 | 0.30 | 8 |
| Aluminium | 61.63 | 1.02 | 2 |

EXAMPLE 2

Temperature           $1700°C \pm 5°C$
Pellet composition:   Same as Example No. 1
Pellet size:          -14/+70 mesh ($d_{50}$ = 500 $\mu$m)
Product size:         -14/+70 mesh ($d_{50}$ = 300 $\mu$m)

| | Feed Rate | | Discharge | |
|---|---|---|---|---|
| | Kg/hr | (lb/hr) | Kg/hr | (lb/hr) |
| Average Rate | 0.56 | (1.24) | 0.3 | (0.65) |
| Standard Deviation | 0.045 | (0.1) | 0.15 | (0.32) |
| Range (low/high) | 0.4 to 0.62 | (0.88 1.38) | 0.045 to 0.65 | (0.1 1.45) |
| Number of Readings | 17 | | 17 | |

| Product Composition | | | |
|---|---|---|---|
| | Wt% | Twice Standard Deviation | Number of Samples |
| Carbon | 0.61 | 0.08 | 5 |
| Oxygen | 0.64 | 0.17 | 5 |
| Nitrogen | 32.18 | 1.21 | 2 |
| Aluminium | 61.67 | 0.55 | 2 |

EXAMPLE 3

Temperature:          $1750°C \pm 5°C$
Pellet composition:   Same as Example No. 1
Pellet size:          -14/+70 mesh ($d_{50}$ = 500 $\mu$m)
Product size:         -14/+70 mesh ($d_{50}$ = 600 $\mu$m)

| | Feed Rate | | Discharge | |
|---|---|---|---|---|
| | Kg/hr | (lb/hr) | Kg/hr | (lb/hr) |
| Average Rate | 1.2 | (2.71) | 0.59 | (1.30) |
| Standard Deviation | 0.034 | (0.075) | 0.29 | (0.64) |
| Range (low/high) | 1.2 to 1.3 | (2.625 2.825) | 0.34 to 1 | (0.75 2.2) |

| Product Composition | | | |
|---|---|---|---|
| | Wt% | Twice Standard Deviation | Number of Samples |
| Carbon | 0.50 | 0.3 | 7 |
| Oxygen | 0.53 | 0.07 | 7 |
| Nitrogen | 32.86 | 1.14 | 5 |
| Aluminium | 64.56 | 0.83 | 5 |

EXAMPLE 4

| AS GROUND PARTICLE SIZES | | | | |
|---|---|---|---|---|
| Fluid Bed Run | Particle Size (Composition) | | | |
| | After Trost Milling | | | After Sweco Milling |
| | Micron | C% | O% | Micron |
| 39 | 7.11 | 0.39 | 0.56 | 1.69 |
| 43 | 3.78 | 0.81 | 0.91 | 1.65 |

It is apparent that many modifications and variations of this invention as herein set forth may be made without departing from the scope thereof. The foregoing specific embodiments described are therefore to be considered in all respects as illustrative and not restrictive, the scope of the invention being indicated by the appended claims rather than by the foregoing description and all changes which come within the means and range of equivalency of the claims are therefore intended to be embraced therein.

**Claims**

1. A process for the continuous production of aluminium nitride comprising:

   forming using a binder agglomerates of uniform size and uniform chemical composition of a stoichiometric mixture of aluminium oxide and carbon and an effective amount of a catalyst selected from a group consisting of calcium fluoride, yttrium fluoride, and sodium fluoride;

   furnacing the agglomerates in an atmosphere of nitrogen in a reaction vessel at temperatures below 1850°C to achieve a uniform and consistent level of conversion; and

   milling the as-reacted agglomerates under a controlled atmosphere to produce aluminium nitride powder comprising high purity aluminium nitride of a particle size of about 1 $\mu$m.

2. A process according to claim 1 wherein the binder is polyvinyl alcohol.

3. A process according to claim 1 or 2 characterised in that the milling step is conducted in an atmosphere of nitrogen.

4. A process for the continuous production of aluminium nitride comprising:

   forming agglomerates of uniform size and homogeneous chemical composition, by mixing a stoichiometric mixture of aluminium oxide and carbon, an effective amount of calcium fluoride catalyst and polyvinyl alcohol solution as binder;

   drying the wet agglomerates in an oven at 120°C in a pan to result in a narrow size distribution;

   furnacing the agglomerates in a nitrogen atmosphere at a temperature below 1850°C to achieve a uniform and consistent level of conversion; and

   milling the as-reacted agglomerates in a nitrogen atmosphere to produce aluminium nitride powder comprising high purity aluminium nitride of a particle size of about 1 $\mu$m.

5. A process according to any one of the preceding claims characterised in that the stoichiometric mixture of reactants comprises 1:3 mole ratio of aluminium oxide to carbon and 0.5% by weight catalyst.

6. A process according to any one of the preceding claims characterised in that furnacing the agglomerates is conducted between the temperature range of 1600°C-1800°C.

7. A process according to any one of the preceding claims characterised in that the furnacing step is conducted in a fluid bed reactor.

8. A process according to claim 7 characterised in that the fluid bed reactor comprises:
   a furnace comprising at least three chambers in a vertical arrangement, an upper, middle and lower chamber, the chambers machined to sleeve fit securely with the other chambers;
   an inlet for the agglomerates at the upper end of the reactor;
   means for feeding the agglomerates into the reactor;
   an inlet means for fluidising nitrogen gas located at the upper end of the reactor;
   a susceptor positioned surrounding the lower chamber;
   heating means positioned surrounding the lower chamber and the susceptor;
   a fluidising bed in the lower chamber;
   a bubble cap to disperse the fluidising gas located at the distal end of said inlet means for the fluidising gas, and below the fluidising bed, comprising a chamber with a lid having a plurality of holes;
   outlet means for the as-reacted agglomerates located proximal to the top of the fluidising bed at the upper end of the lower reaction chamber;
   outlet means for reaction gases at the upper end of the furnace; and
   a plurality of cooling means for the reaction gases and the as-reacted agglomerates.

9. A process according to claim 8 characterised in that the as-reacted agglomerates are discharged from the reactor by overflow into a rotating water-cooled cylinder.

10. A process according to claim 9 characterised in that the conversion reaction is quenched in the rotating water-cooled cylinder to approximately 150°C and then further cooled before milling.

11. A process according to claim 10 characterised in that the cooling step is conducted in an atmosphere inert to aluminium nitride.

12. A process according to any one of the preceding claims characterised in that the milling step is conducted in an atmosphere inert to aluminium nitride and free from oxygen.

13. A process according to any one of the preceding claims characterised in that aluminium nitride containing carbon and oxygen of 0.5 to 1.0% respectively is produced.

14. A process according to any one of the preceding claims characterised in that the furnacing step is conducted for approximately 3-20 hours.

15. A process according to any one of the preceding claims characterised in that the agglomerates are introduced into the reaction vessel for furnacing at a rate of 0.227-2.722 Kg/hr (0.5-6 lb/hr).

16. A process for the continuous production of aluminium nitride characterised by the steps of:
   a) fluidising with nitrogen gas a bed of agglomerates of uniform size and uniform chemical composition of a stoichiometric mixture of aluminium oxide and carbon and an effective amount of a catalyst selected from a group consisting of calcium fluoride, yttrium fluoride, and sodium fluoride;
   b) maintaining the bed at a temperature below 1850°C; and
   c) milling the reacted agglomerates under a controlled atmosphere to produce aluminium nitride powder comprising high purity aluminium nitride of a particle size of about 1 micron.

**Revendications**

1. Procédé pour la production continue de nitrure d'aluminium comprenant :
   La formation, en utilisant un liant, d'agglomérés de dimension uniforme et de composition chimique uniforme d'un mélange stoechiométrique d'oxyde d'aluminium et de carbone et une quantité efficace d'un catalyseur choisi parmi le groupe comportant du fluorure de calcium, du fluorure d'yttrium, et du fluorure de sodium ;

La mise au four des agglomérés dans une atmosphère d'azote dans une enceinte de réaction à des températures inférieures à 7850°C pour obtenir un degré de transformation uniforme et stable ; et

Le broyage de l'aggloméré ayant ainsi réagi sous une atmosphère contrôlée pour produire une poudre de nitrure d'aluminium d'une grande pureté de taille de particule d'environ 1um.

2. Procédé selon la revendication 1 dans lequel le liant est l'alcool polyvinylique.

3. Procédé selon la revendication 1 ou 2 caractérisé en ce que l'étape de broyage est conduite dans une atmosphère d'azote.

4. Procédé pour la production continue de nitrure d'aluminium comprenant :

la formation d'agglomérés de taille uniforme et de composition chimique homogène, en mélangeant un mélange stoechométrique d'oxyde d'aluminium et de carbone, une quantité efficace de catalyseur de fluorure de calcium et une solution d'alcool polyvinylique comme liant ;

le séchage des agglomérés humides dans un four à 120°C dans un récipient pour aboutir à une distribution de taille étroite ;

la mise au four des agglomérés dans une atmosphère d'azote à une température inférieure à 1850°C pour obtenir un degré de transformation uniforme et stable ; et

le broyage des agglomérés ayant ainsi réagi dans une atmosphère d'azote pour produire de la poudre de nitrure d'aluminium comprenant du nitrure d'aluminium de grande pureté d'une dimension de particules d'environ 1 um.

5. Procédé selon l'une quelconque des revendications précédentes caractérisé en ce que le mélange stoechiométrique des réactifs comprend un ratio molaire de 1/3 d'oxyde d'aluminium et de carbone et de 0,5% en poids de catalyseur.

6. Procédé selon l'une quelconque des revendications précédentes, caractérisé en ce que la mise au four des agglomérés est conduite dans le domaine de température entre 1600°C - 1800°C.

7. Procédé selon l'une quelconque des revendications précédentes caractérisé en ce que l'étape de mise au four est conduite dans un réacteur à lit fluidisé.

8. Procédé selon la revendication 7 caractérisé en ce que le réacteur à lit fluidisé comprend :
   - un four comprenant au moins trois chambres dans une disposition verticale, une chambre supérieure, médiane et inférieure, les chambres étant usinées pour s'ajuster par emboitement de façon sureles unes sur les autres ;
   - une entrée pour les agglomérés au niveau de l'extrémité supérieure du réacteur ;
   - des moyens pour amener les agglomérés à l'intérieur du réacteur ;
   - des moyens d'entrée pour de l'azote gazeux, de fluidisation, placé à l'extrémité supérieure du réacteur ;
   - un suscepteur placé autour de la chambre inférieure ;
   des moyens de chauffage situés autour de la chambre inférieure et du suscepteur
   - un lit fluidisé dans la chambre inférieure ;
   - une calotte à barbotage pour disperser les gaz de fluidisation située à l'extrémité éloignée desdits moyens d'entrée moyens des gaz de fluidisation, et au-dessous du lit fluidisé et comprenant une chambre avec un plafond comportant une pluralité de trous ;
   - des moyens de sortie pour les agglomérés de la réaction, situés près du sommet du lit fluidisé à l'extrémité supérieure de la chambre de réaction inférieure
   - des réactions de sortie pour les gaz de réaction à l'extrémité à supérieure du four ; et
   - une pluralité de moyens de refroidissement pour les gaz de réaction et les agglomérés ayant ainsi réagi.

9. Procédé selon la revendication 8 caractérisé en ce que les agglomérés ayant ainsi réagi sont déchargés du réacteur par débordement dans un cylindre en rotation, refroidi à l'eau.

10. Procédé selon la revendication 9 caractérisé en ce que la réaction de transformation subit une trempe dans le cylindre en rotation refroidi à l'eau, 150°C approximativement, et refroidi encore ensuite, avant le broyage.

**11.** Procédé selon la revendication 10 caractérisé en ce que l'étape de refroidissement est conduite dans une atmosphère inerte pour le nitrure d'alumininium.

**12.** Procédé selon l'une quelconque des revendications précédentes caractérise en ce que l'étape de broyage est conduite dans une atmosphère inerte pour le nitrure d'aluminium et libre d'oxygène.

**13.** Procédé selon l'une quelconque des revendications précédentes caractérisé en ce que du nitrure d'aluminium contenant du carbone et de l'oxygène respectivement 0,5 à 1,0% sont obtenus.

**14.** Procédé selon l'une quelconque des revendications précédentes en ce que l'étape de mise au four est menée pendant approximativement 3 à 20 heures.

**15.** Procédé selon l'une quelconque des revendications précédentes caractérisé en ce que les agglomérés sont introduits dans l'enceinte de réaction pour la mise au four, à une vitesse de 0,227 - 2,722 Kg/hr (0,5-6 1b/hr).

**16.** Procédé pour la production continue de nitrure d'aluminium caractérisé par les étapes de :
a) fluidisation avec de l'azote d'un lit d'agglomérés de dimension uniforme de composition chimique uniforme d'un mélange stoechiométrique d'oxyde d'aluminium et de carbone et d'une quantité appropriée d'un catalyseur choisi parmi un groupe contenant du fluorure de calcium, du fluorure d'yttrium et du fluorure de sodium ;
b) de maintien du lit à une température inférieure à 1850°C ; et
c) de broyage des agglomérés ayant réagi sous une atmosphère contrôlée pour produire de la poudre de nitrure d'aluminium comprenant du nitrure d'aluminium d une grande pureté, ayant une taille de particule d'environ 1 micron.

**Patentansprüche**

**1.** Verfahren zur kontinuierlichen Herstellung von Aluminiumnitriden, bei dem durch Anwendung von homogenen Binder-Agglomeraten gleichmäßiger chemischer Zusammensetzung eine stöchiometrische Mischung aus Aluminiumoxyd und Kohlenstoff und ein effektiver Betrag eines Katalysators gebildet wird, der aus einer Gruppe aus Kalziumfluorid, Yttriumfluorid und Natriumfluorid ausgewählt ist;
die Agglomerate in einer Umgebung von Stickstoff in einem Reaktionsbehälter bei einer Temperatur unterhalb 185°C geschmolzen werden, um eine gleichmäßige und konsistente Umsetzung zu erzielen; und
die as-reagierten Agglomerate unter einer kontrollierten Atmosphäre gemahlen werden, um ein Aluminiumnitrid-Pulver mit einem Aluminiumnitrid hoher Reinheit und einer Korngröße von etwa 1 µm zu erzeugen.

**2.** Verfahren nach Anspruch 1, **dadurch gekennzeichnet,** daß der Binder Polyvinylalkohol ist.

**3.** Verfahren nach Anspruch 1 oder 2, **dadurch gekennzeichnet,** daß der Mahlvorgang in einer Atmosphäre aus Stickstoff durchgeführt wird.

**4.** Verfahren zur kontinuierlichen Herstellung von Aluminiumnitriden, bei dem:
homogene Agglomerate mit homogener chemischer Zusammensetzung gebildet werden, indem eine stöchiometrische Mischung aus Aluminiumoxyd und Kohlenstoff, einem effektiven Betrag eines Kalziumfluorid-Katalysators und einer Polyvinylalkohol-Lösung als Binder gemischt wird;
die feuchten Agglomerate in einem Ofen in einem Becken bei 120°C getrocknet werden, um eine Feinverteilung zu erzielen;
die Agglomerate in einer Stickstoff-Atmosphäre bei einer Temperatur unterhalb 185°C geschmolzen werden, um eine gleichmäßige und konsistente Umsetzung zu erzielen; und
die as-reagierten Agglomerate in einer Stickstoff-Atmosphäre gemahlen werden, um ein Aluminiumnitrid-Pulver mit einem Aluminiumnitrid hoher Reinheit und einer Korngröße von etwa 1 µm zu erzeugen

5. Verfahren nach einem der vorangehenden Ansprüche, **dadurch gekennzeichnet,** daß die stöchiometrische Mischung der Reagenzen ein Molekülverhältnis von 1:3 aus Aluminiumoxyd zu Kohlenstoff und 0,5 % Gewichtsanteil des Katalysators enthält.

6. Verfahren nach einem der vorangehenden Ansprüche, **dadurch gekennzeichnet,** daß das Schmelzen der Agglomerate in einem Temperaturbereich zwischen 1600° C und 1800° C erfolgt.

7. Verfahren nach einem der vorhergehenden Ansprüche, **dadurch gekennzeichnet,** daß dei Schmelzvorgang in einem Flüssigkeitsbett-Reaktor durchgeführt wird.

8. Verfahren nach Anspruch 7, **dadurch gekennzeichnet,** daß der Flüssigkeitsbett-Reaktor folgendes enthält:
    einen Schmelzofen mit wenigstens drei Kammern in senkrechter Anordnung, eine obere, mittlere und untere Kammer, wobei die Kammern so gearbeitet sind, daß sie mit den anderen Kammern spielfrei hülsenartig ineinander passen;
    eine Einfüllöffnung für die Agglomerate am oberen Ende des Reaktors;
    Mittel zum Zuführen der Agglomerate in den Reaktor;
    ein Einfüllmittel zum Einströmen von Stickgas am oberen Ende des Reaktors;
    eine die untere Kammer umgebende Aufnahme;
    Heizmittel, die die untere Kammer und die Aufnahme umgeben;
    ein Flüssigkeitsbett in der unteren Kammer;
    eine Glocke zum Zerstreuen des Flüssiggases am entfernten Ende der Einfüllöffnung für das Flüssiggas und unterhalb des Flüssigkeitsbettes, enthaltend eine Kammer mit einem Deckel mit einer Vielzahl von Öffnungen;
    Austrittsmittel für die as-reagierten Agglomerate, angeordnet in der Nähe des oberen Endes des Flüssigkeitsbetts am oberen Ende der unteren Reaktionskammer;
    Austrittsmittel für Reaktionsgase am oberen Ende des Schmelzofens; und
    eine Vielzahl von Kühlmitteln für die Reaktionsgase und die as-reagierten Agglomerate.

9. Verfahren nach Anspruch 8, **dadurch gekennzeichnet,** daß die as-reagierten Agglomerate von dem Reaktor durch einen Überlauf in einen rotierenden, wassergekühlten Zylinder entladen werden.

10. Verfahren nach Anspruch 9, **dadurch gekennzeichnet,** daß die Umsetzreaktion in dem rotierenden, wassergekühlten Zylinder auf etwa 150° C abgekühlt und dann vor dem Mahlen weiter abgekühlt wird.

11. Verfahren nach Anspruch 10, **dadurch gekennzeichnet,** daß der Abkühlvorgang in einer Atmosphäre durchgeführt wird, die gegenüber Aluminiumnitrid inert ist.

12. Verfahren nach einem der vorangehenden Ansprüche, **dadurch gekennzeichnet,** daß der Mahlvorgang in einer Atmosphäre durchgeführt wird, die gegenüber Aluminiumnitrid inert und frei von Sauerstoff ist.

13. Verfahren nach einem der vorangehenden Ansprüche, **dadurch gekennzeichnet,** daß Aluminiumnitrid, enthaltend Kohlenstoff und Sauerstoff von 0,5 bzw. 1,0 %, erzeugt wird.

14. Verfahren nach einem der vorangehenden Ansprüche, **dadurch gekennzeichnet,** daß der Brennvorgang während etwa 3 - 20 Stunden durchgeführt wird.

15. Verfahren nach einem der vorangehenden Ansprüche, **dadurch gekennzeichnet,** daß die Agglomerate in das Reaktionsgefäß eingeführt werden für einen Brennvorgang bei einer Rate von 0,227 - 2,722 kg/Stunde (0,5 - 6 Pfund/Stunde).

16. Verfahren zur kontinuierlichen Herstellung von Aluminiumnitriden, **gekennzeichnet durch** folgende Schritte:
    a) Es wird mit Stickgas ein Bett von homogenen Agglomeraten gleichmäßiger chemischer Zusammensetzung einer stöchiometrischen Mischung aus Aluminiumoxyd und Kohlenstoff und einem effektiven Betrag eines Katalysators, der aus einer Gruppe bestehend aus Kalziumfluorid, Yttriumluorid und Natriumfluorid ausgewählt ist, verflüssigt;

b) Das Bett wird bei einer Temperatur unterhalb 185°C gehalten; und

c) die reagierten Agglomerate werden in einer kontrollierten Atmosphäre gemahlen, um Aluminiumnitrid-Pulver enthaltend Aluminiumnitrid mit hoher Reinheit und einer Korngröße von etwa 1 μm zu erzeugen.

$Al_2O_3 + 3C + 0.5 wt\% Ca F_2$

DRY MIX FOR 5 MIN.
AT HIGH SPEED SETTING

BINDER 8.6% wt
25% PVA +
75% WATER
ADD DURING
MIXING

WET MIX FOR 4 MIN.
AT HIGH SPEED SETTING

DRY OVERNIGHT AT 120°C IN
AIR

SIEVE TO -14/+70 MESH
U.S. SIEVE SIZE → RECYCLE

FLUID BED → DUST TO BAGHOUSE

PRODUCT

WILL INSERT ATMOSPHERE
45 MIN. FOR 10 LBS.
200 MESH, $d_{50} = 7$ MICRONS → +200 MESH 5-20%

MILL INSERT ATMOSPHERE
24 HRS FOR 9 LBS.

MICRON, ULTRAPURE
AlN POWDER
$d_{50} = 1.7$ MICRONS

FIG. 1

FIG. 2

FIG. 3

FIG. 4